# EUROPÄISCHE PATENTANMELDUNG

(11) **EP 1 593 304 A1**
(43) Veröffentlichungstag der Anmeldung: **09.11.2005**
(21) Anmeldenummer: 04010507.4
(22) Anmeldetag: 03.05.2004
(51) Int. Cl.: A01K 1/02

(54) **Abferkelbucht**

(71) Anmelder: Hertach & Partner (Paul Hertach, Res Hertach, Roli Hertach), 9216 Hohentannen (CH)
(72) Erfinder: Hertach, Paul, 9216 Hohentannen (CH); Hertach, Res, 9216 Hohentannen (CH); Hertach, Roli, 9216 Hohentannen (CH)
(74) Vertreter: Muri, Peter

(57) **Zusammenfassung**

Die Erfindung bezieht sich auf eine besondere Ausgestaltung einer Abferkelbucht zum Aufziehen und Beherbergen von Mutterschweinen und Ferkeln, wobei erfindungsgemäß vorgesehen ist, einen ersten Sektor (13) und einen weiteren Sektor (14) zu bilden, wobei bei einem Ausführungsbeispiel der erste Sektor (13), das Ferkelnest (14), die Futterstelle (15) und der Liegebereich (16) umfasst und als Warmbereich ausgebildet ist und der weitere Sektor (14) als Exkrementenbereich ausgebildet ist, der vorzugsweise im Außenbereich angeordnet ist.

## Beschreibung

Die Erfindung bezieht sich auf eine Abferkelbucht in Schweinestallungen landwirtschaftlicher Betriebe, bestehend aus mehreren Bereichen für den Aufenthalt von Mutterschweinen und ihren Ferkeln, wobei ein erster Bereich zur Aufnahme von Ferkeln in der Ausbildung eines Ferkelnests vorgesehen ist und ein weiterer Bereich als Liegebereich für Ferkel und Mutterschwein sowie eine Futterstelle.

### Stand der Technik

Abferkelbuchten werden insbesondere während des Säugens der Ferkel durch das Mutterschwein verwendet, um zu verhindern, dass eines oder mehrere der Ferkel durch das Mutterschwein erdrückt werden. Sind die Ferkel groß, d.h., wenn sie nicht mehr gesäugt werden müssen, so benötigt man auch die Abferkelbucht nicht mehr, so dass es zweckmäßig ist, einen Ferkelschutzkorb, der aus dem Stand der Technik bekannt ist, zu entfernen, um den Platz für andere Dinge verwenden zu können.

Übliche Abferkelbuchten umfassen einen Boden, der dazu bestimmt ist, das Mutterschwein aufzunehmen und beiderseits desselben einen Boden, der dazu bestimmt ist, das Ferkel aufzunehmen.

Ferner ist aus dem Stand der Technik bekannt, dass für das Ferkel in der Regel Gitterroste als Bodenausbildung verwendet werden, wobei für das Mutterschwein metallische Gitterroste vorgesehen sind. Diese Gitterroste dienen dazu, eine Anhäufung von Schweineexkrementen an der Oberfläche des Bodens der entsprechenden Abteile mit Hilfe der Öffnungen zu vermeiden, wobei die Schweineexkremente durch diese Öffnungen abfließen und auf herkömmlicher Weise in einen Behälter oder einer sogenannten Jauchegrube aufgefangen werden. Die Materialunterschiede sind deswegen vorgesehen, um das Ferkel anzuregen, auf dem für ihn vorgesehenen Gitterrost zu verbleiben, da dieser ein wesentlich angenehmeres Gefühl für das Ferkel mit sich bringt, da die Berührung mit einem Kunststoff ein anderes Gefühl vermittelt als die Berührung mit metallischem Stoff.

Zudem umfassen Bereiche in Abferkelbuchten Heizelemente, die insbesondere in Ausbildung von Matten vorgesehen sind und so das Ferkelnest bilden. Diese beheizten Bereiche sind deswegen notwendig, da die Ferkel für das Überleben dringend entsprechend Wärme benötigen.

In der Regel ist auch das Ferkelnest in Bezug auf den übrigen Liegebereich höher angeordnet, um zu verhindern, dass das Ferkel sich auf dem Boden, auf dem sich das Mutterschwein bewegt, fort bewegt, um zu verhindern, dass dieses möglicherweise erdrückt wird.

Neuere Bestimmungen zur Tierhaltung, insbesondere zur artgerechten Haltung, schreiben vor, dass Mutterschwein und Ferkel nicht mehr mit sogenannten Ferkelschutzgittern eingesperrt sein dürfen. Zudem sind Gitterböden nur eingeschränkt zu verwenden.

### Nachteile des Standes der Technik

Ein wesentlicher Nachteil bei bekannten Abferkelbuchten besteht darin, dass insbesondere das Ferkel Stress erleidet und möglicherweise auch entsprechenden Verletzungen, insbesondere an den Füßen, da das neugeborene Ferkel noch unsicher läuft und sich so auch an den Gitterrosten verletzen kann, um das Mutterschwein zu erreichen.

Ferner besteht ein Nachteil des Standes der Technik darin, dass separate Einrichtungen in Form von Metallgittern geschaffen werden, um eine Abferkelbucht in einem Stall auszubilden. Diese Abferkelbuchten sind in der Regel sehr gering bemessen und lassen für die Tiere sehr wenig Raum, um sich zu bewegen.

Zudem sind solche Einrichtungen kostenintensiv und werden in der Regel nur wenige Wochen in einem Jahr genutzt.

Ferner bringt der Einsatz von sogenannten Festböden (im Gegenteil zu Gitterböden) den Nachteil mit sich, dass die Exkremente unmittelbar auf dem Boden liegen und so unangenehmen Geruch produzieren. Zudem geraten auch die Ferkel und das Mutterschwein mit den Exkrementen in Kontakt. Dies führt wiederum zu Infektionen, aber auch zu einem erhöhten Arbeitsaufwand.

### Aufgabe der Erfindung

Die Aufgabe der Erfindung ist es, eine Abferkelbucht zu schaffen, die einfach aufgebaut und kostengünstig herstellbar ist.

### Lösung der Aufgabe

Die Lösung der Aufgabe besteht darin, eine Abferkelbucht derart auszugestalten, dass das Ferkelnest, der Liegebereich und die Futterstelle einen Sektor bilden und ein weiterer Sektor vorgesehen ist, der den Exkrementenbereich umfasst, wobei die beiden Sektoren durch ein Trennelement voneinander unterteilt sind und klimatisch different sind.

### Vorteile der Erfindung

Der Vorteil der Erfindung besteht darin, dass eine Abferkelbucht geschaffen worden ist, die im Wesentlichen zwei Sektoren umfasst, die klimatisch unterschiedlich sind, in dem sich das Mutterschwein und die Ferkel je nach Bedürfnis frei bewegen können. Das Ferkel kann das Ferkelnest benutzen, es kann sich jedoch genauso im Liegebereich als auch im Exkrementenbereich (im Außenbereich) bewegen. Die Abferkelbuchten sind derart zueinander angeordnet, dass Mutterschwein und Ferkel Kontakt insbesondere im Aussenbereich mit den benachbarten Abferkelbuchten suchen können. Vorzugsweise sind die Abferkelbuchten nebeneinander angeordnet und im Aussenbereich durch ein Gitter räumlich aber nicht optisch voneinander getrennt.

Das Verhältnis der beiden Flächen der vorgenannten Sektoren steht vorzugsweise in einem Verhältnis 70 : 30, wobei der erste Sektor gegenüber dem weiteren Sektor größer ist. Die beiden Sektoren sind durch Türen, die variabel öffenbar sind, sowohl von Tier als auch von Mensch, voneinander getrennt. Vorzugsweise sind zwei Türelemente vorgesehen, die senkrecht zueinander angeordnet sind und eine Schleuse bilden. Der erste Sektor (warmer Klimabereich) weist auf der dem zweiten Sektor abgewandten Seite zusätzlich eine weitere Tür auf, die einen Zugang zu einem Kontrollgang verschafft, der von allen nebeneinander und gegenüberliegenden Abferkelbuchten ebenfalls zugänglich ist. Dieser Zugang dient zum Einen dazu, dass Menschen den Liegebereich und den Ferkelnestbereich säubern können, dient aber auch zu Kontrollzwecken.

Ein wesentlicher Vorteil der Erfindung besteht darin, dass die Abferkelbuchten in Ausbildung eines Baukastensystems aufgebaut sind, wobei die einzelnen Bereiche, wie Ferkeinest, Liegebereich und auch Futterstelle sowie Exkrementenbereich, beliebig untereinander anordbar sind, jedoch immer unter der Berücksichtigung, dass zwei klimatische Zonen derart vorzusehen sind, dass ein Sektor ein Warmbereich bildet und ein weiterer Bereich das entsprechende Außenklima aufweist. Bevorzugt bilden Liegebereich, Ferkelnest und Futterbereich den ersten Sektor (Warmbereich) und der Exkrementenbereich den weiteren Sektor (Aussenbereich).

Der Liegebereich weist bevorzugt einen festen Boden auf, da die Mutterschweine und auch die Ferkel in der Regel im Aussenbereich, d.h. im weiteren Sektor koten, insbesondere in den Bereichen, in denen sie Kontakt mit anderen Schweinen und Ferkeln haben.

Der Exkrementenbereich weist bevorzugt einen perforierten Boden, beispielsweise in der Ausbildung eine Gitters auf.

Weitere vorteilhafte Ausgestaltungen sind der nachfolgenden Beschreibung sowie den Zeichnungen als auch den Ansprüchen zu entnehmen.

### Zeichnungen

Es zeigen
- Fig. 1: eine perspektivische Ansicht auf eine Schweinestallung mit den erfindungsgemäßen nebeneinander angeordneten Abferkelbuchten;
- Fig. 2: eine Draufsicht auf die Schweinestallung mit den Abferkelbuchten gemäss Fig. 1, schematisch dargestellt;
- Fig. 3: eine Draufsicht zur Darstellung der unterschiedlichen Bereiche und Sektoren einer erfindungsgemäßen Abferkelbucht gemäss Fig. 2.

### Beschreibung eines Ausführungsbeispiels

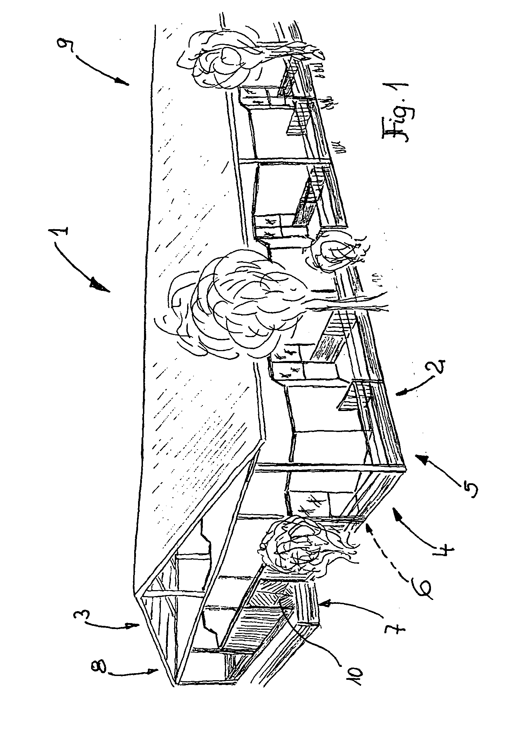

In Figur 1 ist in perspektivischer Ansicht eine Schweinestallung 1 gezeigt. Die Schweinestallung 1 in Form eines Hauses umfasst an ihren Längsseiten 2, 3 jeweils nebeneinander angeordnete erfindungsgemäss ausgestaltete Abferkelbuchten 4. Die Abferkelbuchten 4 untereinander sind räumlich getrennt und weisen jeweils einen Außenbereich 5 und einen nicht näher dargestellten Innenbereich 6 auf. In der Mitte der Schweinestallung 1 ist ein Kontrollgang 7 vorgesehen, der es ermöglicht, die Abferkelbuchten 4 innerhalb der Schweinestallung 1 zu begehen. Vorzugsweise zu beiden Stirnseiten 8, 9 sind Türen 10 angeordnet, die den Kontrollgang 7 begrenzen.

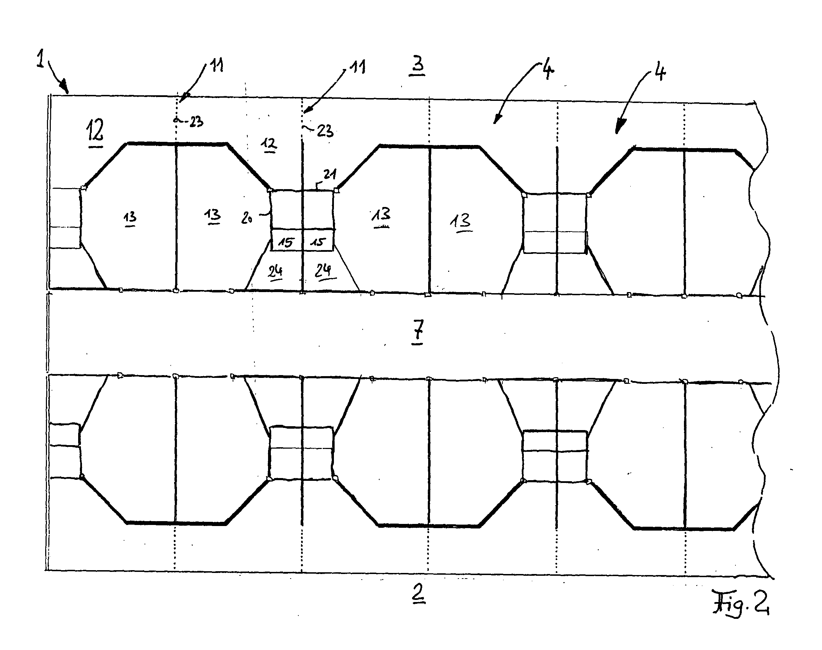

In Figur 2 ist eine Draufsicht auf die Schweinestallung 1 dargestellt. Bei dem hier dargestellten Ausführungsbeispiel sind an beiden Längsseiten 2, 3 Abferkelbuchten 4 angeordnet. Die Abferkelbuchten 4 untereinander sind durch eine Begrenzung 11 von einander getrennt und weisen vorzugsweise einen gemeinsamen Bereich 12 auf, der als Exkrementenbereich ausgelegt ist.

Innerhalb der Schweinestallung 1 ist der Kontrollgang 7 parallel zu den Längsseiten 2 und 3 vorgesehen.

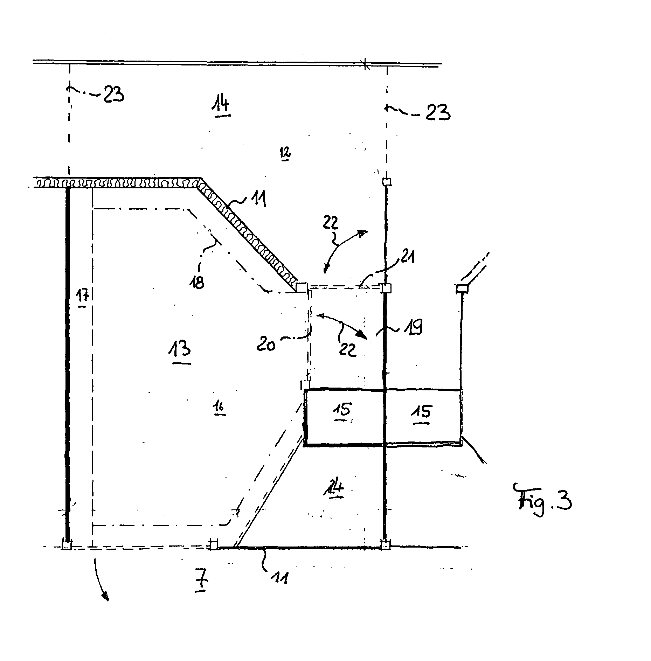

In Figur 3 ist in detaillierter Draufsicht die Ausbildung einer Abferkelbucht 4 dargestellt. Sie gliedert sich in zwei wesentliche Sektoren, nämlich einen ersten Sektor 13 und einen weiteren Sektor 14.

Der erste Sektor 13 ist innerhalb der Schweinestallung 1 angeordnet und wird als Warmbereich definiert. Dies bedeutet, dass innerhalb dieses ersten Sektors 13 ein Innen- bzw. Raumklima herrscht.

Der erste Sektor 13 umfasst bei dem hier dargestellten Ausführungsbeispiel ein Ferkelnest 24, eine Futterstelle 15 sowie einen Liegebereich 16. Der Liegebereich 16 ist derart gestaltet, dass zusätzlich ein Abliegeplatz 17 sowie zur Begrenzung 11 hin Abweisbügel 18 (verhindert das Erdrücken der Ferkel durch das Mutterschwein) vorgesehen sind. Die Trennung des ersten Sektors 13 gegenüber dem zweiten Sektor 14 erfolgt über eine Schleuse 19. Die Schleuse 19 umfasst eine Tür 20 zum ersten Sektor 13 hin und eine Tür 21 zum weiteren Sektor 14 hin. Die Türen 20 öffnen und schließen sich in den angegebenen Pfeilrichtungen 22. Vorzugsweise sind diese Türen 20 isoliert, um keine Kältebrücke zwischen den beiden klimatisch getrennten Sektoren 13, 14 entstehen zu lassen.

Die Eigenschaften der einzelnen Bereiche, insbesondere des Ferkelnests 24, der Futterstelle 15 und des Liegebereichs 16 sind handelsüblich und auch räumlich derart angeordnet, dass das Ferkelnest 24 gegenüber dem Liegebereich 16 erhöht angeordnet ist. Die Futterstelle 15 ist derart angeordnet, dass sie über den Kontrollgang 7 sehr einfach befüllt bzw. gereiningt werden kann. Ein weiterer Vorteil besteht darin, dass zur nebengeordneten Abferkelbucht 4 sich die weitere Futterstelle 15 für die weitere Abferkelbucht 4 unmittelbar anschließt, so dass das Befüllen und Reinigen der Futterstelle 15 einfach ausgeübt werden kann.

Der weitere Sektor 14 ist als Exkrementenbereich ausgebildet und durch das Trennelement 11 von dem ersten Sektor 13, der als Innenbereich ausgebildet ist, getrennt. Wie auch in Figur 1 dargestellt, befindet sich ein großer Teil dieses Sektors 14 auch außerhalb der Schweinestallung 1, jedoch teilweise überdacht, so dass hier ein entsprechendes Außenklima herrscht. Zusätzlich sind an den weiter nach außen führenden Bereichen Gitter 23 vorgesehen, die für die Ferkel und Mutterschweine eine entsprechende Barriere darstellen. Jedoch ist es wichtig, dass keine optische Trennung erfolgt, so dass Mutterschwein und Ferkel mit den benachbarten Mutterschweinen und Ferkel in Kontakt treten können. Gerade diese Verbindung hat sich als sehr praktisch erwiesen, da die Schweine in diesen Sektor aufgrund dieser Gegebenheit koten und somit die Möglichkeit schafft, den Liegebereich 16 mit einem Festboden auszustatten.

Vorzugsweise sind die Sektoren 13 und 14 derart aufgeteilt, dass der erste Sektor 13 ca. 70 % der Gesamtfläche einnimmt und der weitere Sektor 14 30 %. Jedoch ist dies ausschließlich ein Richtwert und kann entsprechend der Anzahl der Ferkel und Mutterschweine variiert werden.

Eine weitere bevorzugte Ausführungsform der Erfindung besteht darin, dass die einzelnen Sektoren 13, 14 als Baukastensystem ausgebildet sind. Eine weitere Ausbildung kann darin bestehen, dass insbesondere der Sektor 13 ebenfalls in mehrere Baukastenelemente wie Ferkelnest 24, Futterstelle 15, Liegebereich 16, Abliegeteil 17, Abweisbügel 18 unterteilbar ist, so dass je nach Ausbildung der bereits vorhandenen Schweinestallung 1 eine einfache und kostengünstige Anpassung erfolgen kann.

Jedoch hat es sich als sehr vorteilhaft erwiesen, die einzelnen Bereiche sowie Sektoren derart anzuordnen, wie sie beispielsweise in Figur 3 dargestellt sind.

## Patentansprüche

1. Abferkelbucht in Schweinestallungen landwirtschaftlicher Betriebe, bestehend aus mehreren Bereichen für den Aufenthalt von Mutterschwein und ihren Ferkeln, wobei ein erster Bereich zur Aufnahme von Ferkeln in der Ausbildung eines Ferkelnests vorgesehen und ein weiterer Bereich als Liegebereich für Ferkel und Mutterschweine sowie eine Futterstelle, **dadurch gekennzeichnet, dass** zumindest das Ferkelnest (14) und der Liegebereich (16) einen ersten Sektor (13) bilden und die Abferkelbucht (4) einen weiteren Sektor (14) aufweist, der als Exkrementenbereich ausgebildet ist, wobei der erste Sektor (13) und der weitere Sektor (14) durch ein Trennelement (11) unterteilt sind und der erste Sektor (13) ein im Vergleich zum zweiten Sektor (14) anderes Klima aufweist.

2. Abferkelbuch nach Anspruch 1, **dadurch gekennzeichnet, dass** der erste Sektor (13) ein Raumklima aufweist.

3. Abferkelbuch nach Anspruch 1, **dadurch gekennzeichnet, dass** der weitere Sektor (14) ein Aussenklima aufweist.

4. Abferkelbuch nach Anspruch 1, **dadurch gekennzeichnet, dass** die Sektoren (13) und (14) sequenziell nebeneinander angeordnet sind und auf diese Art und Weise mehrere Abferkelbuchten (4) bilden.

5. Abferkelbuch nach Anspruch 1 oder 2, **dadurch gekennzeichnet, dass** der erste Sektor (13) als Baukastensystem ausgebildet ist.

6. Abferkelbuch nach Anspruch 1 oder 2, **dadurch gekennzeichnet, dass** der weitere Sektor (14) als Baukastensystem ausgebildet ist.
